# EUROPEAN PATENT APPLICATION

(11) **EP 1 679 604 A1**
(43) Date of publication of application: **12.07.2006**
(21) Application number: 04793132.4
(22) Date of filing: 28.10.2004
(51) Int. Cl.: G06F 12/14, G06F 3/00, G06F 12/00

(54) **ELECTRONIC DOCUMENT READING SYSTEM**

(30) Priority: 29.10.2003 JP 2003369553
(71) Applicant: MATSUSHITA ELECTRIC INDUSTRIAL CO., LTD., Kadoma-shi, Osaka 571-8501 (JP)
(72) Inventor: FUKADA, Tetsuji, c/o Matsushita El. Ind. Co., Ltd., Chuo-ku, Osaka-shi, Osaka 540-6319 (JP); INUI, Shinya, c/o Matsushita Elect. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/016024
(87) International publication number: WO 2005/041048

(57) **Abstract**

The present invention aims to provide an electronic document viewing system meeting the convenience of users, while ensuring the security of electronic documents. A viewing apparatus has an acquiring unit for receiving a first layer and a second layer from a creating apparatus. The first layer contains a document laid out therein, and the second layer is defined to cover at least part of the first layer. The viewing apparatus also has a control unit for setting a display mode of the second layer, and a display unit for displaying the electronic document file in accordance with the display mode set by the control unit.

## Description

### Technical Field

The present invention relates to a system for viewing electronic documents, and especially to a technique for ensuring security of the electronic documents.

### Background Art

Conventionally, there are two systems for users to view electronic documents stored on a server, with a user terminal (hereinafter, "client").
In the first system, a client accesses a server over a network to allow a user to view electronic documents. For example, a patent literature 1 listed below discloses a technique for a client to access a Web server to allow a user to view electronic documents using a Web browser.

In the second system, a client accesses a server over a network, downloads electronic documents, and allows a user to view the downloaded documents. In the case where the server is a Web server, the client downloads electronic documents using the download function of the Web server.
Despite that the above two systems are already in use, there still is a demand for a system providing greater convenience to various users including system administrators, document creators, and general users.

(Patent Literature 1) JP Patent Application Publication No. 2001-356953

### Disclosure of the Invention

The present invention is made to address the above demand, and aims to provide an electronic document viewing system meeting the conveniences of various users, while ensuring security of electronic documents.
In order to achieve the above aim, the present invention provides a viewing apparatus that acquires an electronic document file containing a first layer defined to present a document image and a second layer defined to cover at least part of the first layer; sets a display mode of the second layer depending on a pattern of viewing the electronic document file; and displays the first and second layers. Here, the second layer is displayed in the set display mode and overlaid on the first layer.

With the structure stated above, when the acquired electronic document file is viewed by a user, the viewing apparatus displays the electronic document file in a different mode depending on the pattern of viewing.
Here, the viewing apparatus may judge whether the electronic document file is acquired over a network; set the second layer to a transparent mode if the judgment is affirmative, and to a non-transparent mode if the judgment is negative; and display the second layer transparently in the transparent mode so that the document image is visible, and display the second layer non-transparently in the non-transparent mode so that the document image is not visible.

With the structure stated above, the second layer covers or conceals the first layer in the case where the electronic document file is not acquired over a network. Consequently, the user is not allowed to view the contents of any electronic document file stored on a local disk of the viewing apparatus. Rather, the user is only allowed online viewing of electronic document files over a network.

Here, the viewing apparatus may acquire the electronic document file containing: a judgment instruction for judging whether the electronic document file is acquired over a network; a mode setting instruction for setting the second layer to the transparent mode if the judgment is affirmative and to the non-transparent mode if the judgment is negative; and a display instruction for displaying the first and second layers with the second layer being overlaid on the first layer. The viewing apparatus may execute the judgment instruction, the mode setting instruction, and the display instruction.

With the structure stated above, by executing the instructions contained in the electronic document file, the viewing apparatus covers or conceals the first layer with the second layer in the case where the electronic document file is not acquired over a network. Thus, the viewing apparatus may be realized by a general purpose computer.
Here, the viewing apparatus may determine whether a path of the electronic document file includes the predetermined character string "http://", and judge that the electronic document file is acquired over a network if the predetermined character string "http://" is included and that the electronic document file is not acquired over a network if the predetermined character string "http://" is not included.

With the structure stated above, it is readily judged that whether or not the electronic document file is acquired over a network.
Here, the viewing apparatus may make a first determination of whether the path includes the predetermined character string "http://"; and a second determination of whether the electronic document file is being executed using plug-in software or application software. The viewing apparatus may judge that the electronic document file is acquired over a network if the first determination results in the affirmative and the second determination results in that plug-in software is used, and otherwise judge that the electronic document file is not acquired over a network.

With the structure stated above, the judgment as to whether the electronic document file is acquired over a network is made not only with the path but also with the status of the electronic document file. That is to say, the judgment as to whether the electronic document file is acquired over a network is made even more reliably.
Here, the viewing apparatus may store first identification information identifying the viewing apparatus. The electronic document file may contain second identification information identifying an apparatus permitted to view the electronic document file. The viewing apparatus may judge whether the first identification information matches the second identification information, and make the first and second determinations when the first and second identification information matches, and set the second layer to the non-transparent mode prior to the first and second determinations if the first and second identification information does not match.

With the structure stated above, prior to the first and second determinations, it is determined using the ID of the viewing apparatus whether the viewing apparatus is permitted to view the electronic document file. Thus, the electronic document file is only viewable over a network by the user of an authorized viewing apparatus that is permitted to view the electronic document.
Here, the electronic document file may contain time information showing a predetermined time period. The viewing apparatus may set the second layer to the transparent mode even if the electronic document file is judged not acquired over a network, measure a time period during which the electronic document file is displayed, and set the second layer to the non-transparent mode when the measured time period reaches the predetermined time period shown by the time information.

With the structure stated above, even if the electronic document file is not acquired over a network, the user is still allowed to view the electronic document within the predetermined time period shown by the time information. As a result, the user convenience increases.
In another aspect, the present invention provides an electronic document file creating apparatus for creating an electronic document file configured to be displayed in a different mode depending on a pattern in which the electronic document file is viewed. The electronic document file creating apparatus stores a first layer defined to present a document image; creates a second layer; creates viewing control information for changing a display mode of the second layer depending on a viewing pattern; and creates an electronic document file containing the first layer, the second layer, and the viewing control information.

With the structure stated above, the electronic document file creating apparatus is enabled to create an electronic document file configured to be displayed in a different mode depending on the pattern in which the electronic document file is viewed.
Here, the electronic document file creating apparatus may create the viewing control information containing: a judgment instruction for judging, when the electronic document file is displayed on a viewing apparatus, whether the electronic document file is supplied to the viewing apparatus over a network; a mode setting instruction for setting the second layer to a transparent mode if the judgment is affirmative and to a non-transparent mode if the judgment is negative; and a display instruction for displaying the first and second layers with the second layer being overlaid on the first layer.

With the structure stated above, the electronic document file creating apparatus creates an electronic document file containing the instructions stated above. Consequently, the viewing apparatus is enabled to change the display mode of the second layer, simply by executing the instructions embedded in the electronic document file. Thus, a general purpose computer, such as a PC, may serve as the viewing apparatus.
Here, the electronic document file creating apparatus may further receive a document; create the first layer from the received document and stores the first layer ; stores the created electronic document file; receive a transmission request for the electronic document file from a viewing apparatus; and read, upon receipt of the transmission request, the stored electronic document file and transmits the read electronic document file to the viewing apparatus that issued the transmission request.

With the structure stated above, the electronic document file creating apparatus is enabled to create an electronic document from a paper-based document. That is, a single apparatus can create both an electronic document and viewing control information, which makes it possible to downsize the overall system.

### Brief Description of the Drawings

Fig. 1 shows the structure of an electronic document viewing system 1;
Fig. 2 shows the functional blocks of a document creation server 10;
Fig. 3A shows the data structure of electronic document data 110 created by the document creation server 10, and Fig. 3B shows the initial setting of attributes 113 of a text field 112 contained in the electronic document data 110;
Fig. 4 shows the data structure of viewing information 120 received by a viewing-information input unit 104 included in the document creation server 10;
Fig. 5 shows the functional blocks of a file server 20;
Fig. 6 shows the data structure of an electronic document file 210 created by the file server 20;
Fig. 7A shows part of mode control information 114 embedded into the electronic document file 210, and Fig. 7B shows the data structure of offline information 115 added to the electronic document file 210;
Fig. 8 shows the data structure of an electronic document file 220 created by a file server 30;
Fig. 9 shows a flowchart of processing steps performed by the document creation server 10 for creating electronic document data (continued to Figs. 10 and 11);
Fig. 10 shows a flowchart of processing steps performed by the file server 20 for creating electronic document data (continued from Fig. 9);
Fig. 11 shows a flowchart of processing steps performed by the file server 30 for creating electronic document data (continued from Fig. 9);
Fig. 12 shows the functional blocks of a user client 40;
Fig. 13 shows a flowchart of processing steps performed by an application executing unit 313;
Fig. 14 shows the flows of data for online viewing and offline viewing of an electronic document by the user client 40;
Fig. 15 shows a flowchart of processing steps performed by the user client 40, a user client 50, and an administrator client 60 for viewing an electronic document file;
Fig. 16A shows a flowchart of processing steps performed by a respective client when executing the mode control information 114, Fig. 16B shows a flowchart of processing steps performed by a respective client when executing mode control information 224;
Fig. 17 shows a flowchart of processing steps performed by a respective client for viewing an electronic document file in an application mode; and
Fig. 18A shows an electronic document file displayed on a monitor of a respective client in the case where the text field is set to a "Non-Transparent" display mode, and Fig. 18B shows an electronic document file displayed on the monitor of a respective client in the case where the text field is set to a "Transparent" display mode.

### Best Mode for Carrying Out the Invention

Hereinafter, a description is given to an embodiment of the present invention with reference to the accompanying drawings.
First, a description is given to an electronic document viewing system 1 according to the embodiment of the present invention with reference to the accompanying drawings.
<Electronic Document Viewing System 1>
The electronic document viewing system 1 is used in a business entity for controlling viewing of electronic documents.
Electronic documents referred to in this embodiment are technical materials converted into PDF (Portable Document Format) files.

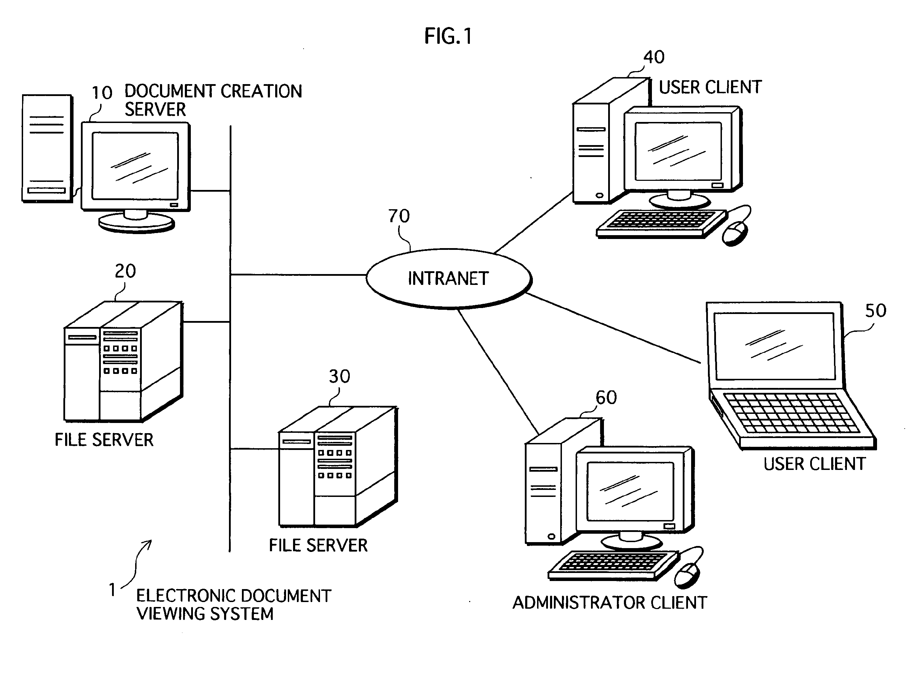

Fig. 1 shows the hardware structure of the electronic document viewing system 1. As shown in the figure, the electronic document viewing system 1 is composed of a document creation server 10, file servers 20 and 30, user clients 40 and 50, and an administrator client 60.
The document creation server 10 and the file servers 20 and 30 are connected via a LAN. In addition, the servers are connected to the clients via an intranet 70.

The document creation server 10 is a device used to create electronic documents. The file servers 20 and 30 are devices used to create and manage electronic document files. Here, the electronic document files are created from the electronic documents that are created by the document preparation server 10, and later supplied to the clients.
The user client 40 is owned by a document creator. The user client 50 is owned by a general user viewing electronic documents. The administrator client 60 is owned by an administrator of the system.

Each client can access the file servers 20 and 30 via the intranet 70 and allow the user to view electronic documents online. In addition, each client can download electronic documents from the file servers 20 and 30 to the local disk and allow the user to view the downloaded electronic documents offline.

### <Structure of Document Creation Server 10>

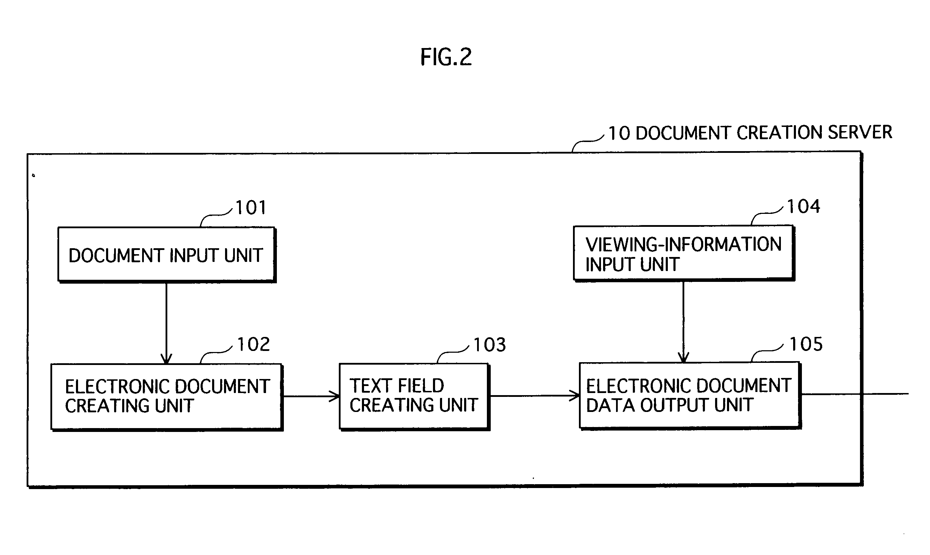

Fig. 2 shows the functional blocks of the document creation server 10. As shown in the figure, the document creation server 10 includes a document input unit 101, an electronic document creating unit 102, a text-field creating unit 103, a viewing-information input unit 104, and an electronic document data output unit 105.

Physically, the document creation server 10 is a computer system composed of a microprocessor, ROM, RAM, hard disk unit, network connection unit, and the like.

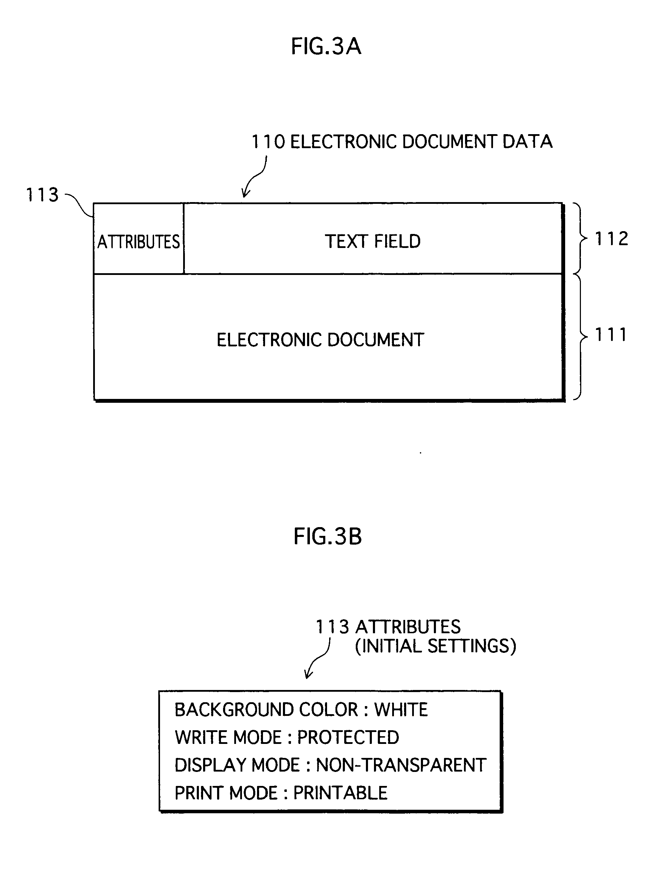

Fig. 3A shows the data structure of electronic document data 110, which is one specific example of electronic document data. As shown in the figure, the electronic document data 110 is composed of an electronic document 111 and a text field 112. The text field 112 contains attributes 113.

Hereinafter, each unit of the document creation server 10 is described using the procedure for creating the electronic document data 110.
(1) Document Input Unit 101
   The document input unit 101 specifically is word processing software, drawing software, or the like. The document input unit 101 receives document data using such software, and passes the received document data to the electronic document creating unit 102. Document data referred to herein is any combination of text, graphics, and images.

It should be noted that the document input unit 101 is not limited to word processing software or drawing software. The document input unit 101 may be implemented by data input interface connected to a scanner and reads paper-based data, such as text, graphics, images, using the scanner.
(2) Electronic Document Creating Unit 102
   The electronic document creating unit 102 receives document data from the document input unit 101, and creates the electronic document 111 from the received document data, and passes the electronic document 111 to the text-field creating unit 103.

Physically, the electronic document creating unit 102 is composed of a microprocessor, ROM, RAM, and the like. The ROM or RAM stores a program for PDF conversion. Through execution of the PDF conversion program by the microprocessor, the electronic document creating unit 102 creates the electronic document 111, which is a layer containing a document.
(3) Text-Field Creating Unit 103
   Physically, the text-field creating unit 103 is composed of a microprocessor, ROM, RAM, and the like.

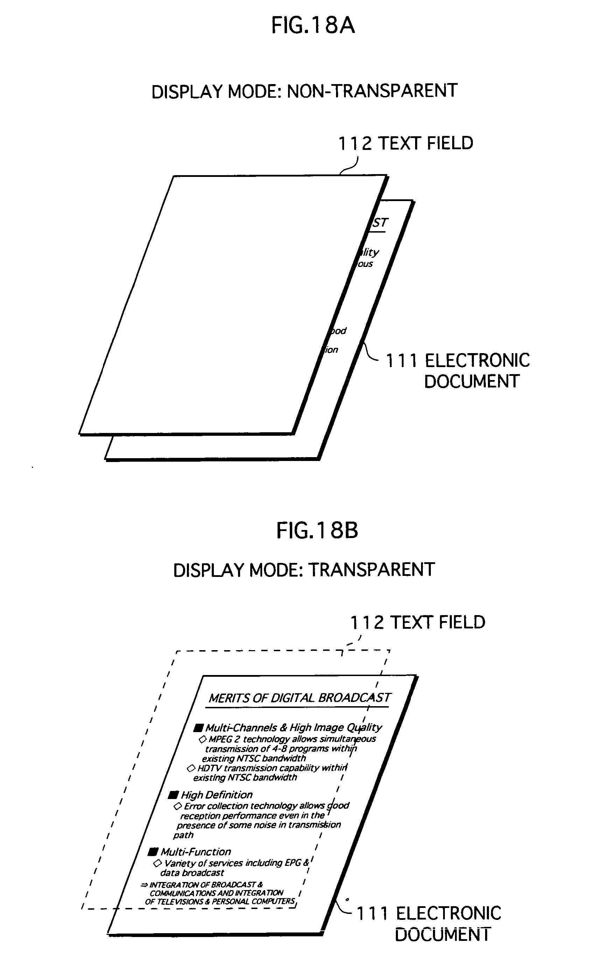

Upon receipt of the electronic document 111 from the electronic document creating unit 102, the text-field creating unit 103 creates a text field by the microprocessor executing the PDF conversion program stored in the ROMor RAM. Specifically, an annotation layer defined in the PDF format is used as the text field.
When displayed on a client's monitor, the text field is overlaid on the electronic document (see Fig. 18).

The text-field creating unit 103 sets attributes of the created text field. The attributes determine the display behavior and is composed of four items, which are "Background Color", "Write Mode", "Display Mode", and "Print Mode"
The "Background Color" item shows the color of the text field when displayed on a client's monitor.

The "Write Mode" item is set either to "Writable" or "Protected". When set to "Writable" , the text field is writable when displayed with an electronic document on a client's monitor. When set to "Protected", writing to the text field is write-protected.
The "Display Mode" item is set either to "Transparent" or "Non-Transparent". When set to "Transparent", the text field is transparent when displayed on a client's monitor. Thus, the electronic document layered beneath the text field is visible through the text field. When set to "Non-Transparent", on the other hand, the text field is not transparent. Thus, an electronic document layered beneath the text field is hidden and thus not visible.

The "Print Mode" item is set to either "Printable" or "Non-Printable". When set to "Printable", the text field displayed on a client's monitor is available for printing, so that the electronic document layered beneath the text field is not available for printing. On the other hand, when set to "Non-printable", the text field is not available for printing, so that the electronic document layered beneath the text field is available for printing.

The attributes are initially set to default values by the text-field creating unit 103, but can be later updated by a respective client in view of how the display of the electronic document and the text field turns out on the monitor.
Fig. 3B shows a specific example of attributes 113 set for the text field 112 by the text-field creating unit 103. As shown in the figure, the attributes 113 are initially set as follows: "Background Color: White", "Write Mode: Protected", "Display Mode: Non-Transparent", and "Print Mode: Printable".

Because of the attributes 113 set as above, when displayed on a client's monitor along with the electronic document 111, the text field 112 is displayed in white due to the "Background Color: White" setting, and not writable due to the "Write Mode: Protected" setting. In addition, due to the "Display Mode: Non-Transparent" setting, the text field 112 is not transparent and thus the electronic document 111 is hidden and not viewable. Due to the "Print Mode: Printable" setting, the text field 112 is available for printing but not the electronic document 111.

The text-field creating unit 103 outputs the electronic document data 110 that is composed of the electronic document 111 and the text field 112 (containing the attributes 113) to the electronic document data output unit 105.
(4) Viewing-Information Input Unit 104
   The viewing-information input unit 104 receives input of viewing information for restricting viewing of a single electronic document, from the administrator of the system. That is, there are different pieces of viewing information in one-to-one correspondence with electronic documents created by the electronic document creating unit 102. Each piece of viewing information shows the name of each client permitted to view a corresponding electronic document online, a device ID uniquely identifying the client, and a permitted offline viewing time showing a specific time period for which the client is permitted to view the electronic document offline. The viewing-information input unit 104 outputs the received viewing information to the electronic document data output unit 105.

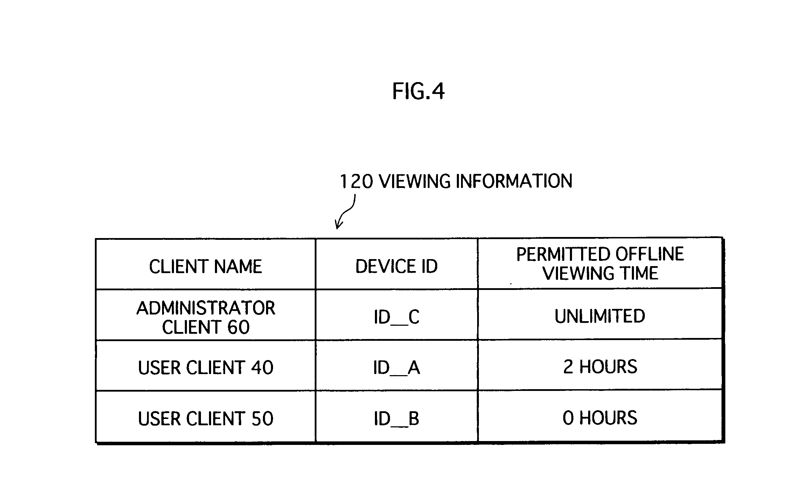

Fig. 4 shows viewing information 120 relating to viewing of the electronic document 111. The viewing information 120 names the administrator client 60 and the user clients 40 and 50. That is, those three clients are permitted to view the electronic document 111 online.
The viewing information 120 further shows the following. The administrator client 60 has the device ID "ID_C" and is permitted offline viewing of the electronic document 111 for "Unlimited" number of hours. The user client 40 has the device ID "ID_A" and is permitted offline viewing of the electronic document 111 for the maximum of "2 Hours". The user client 50 has the device ID "ID_B" and is not permitted offline viewing of the electronic document 111 at all. That is , the administrator of the system is able to view the electronic document 111 for unlimited number of hours even while offline. The general users are not permitted to view the electronic document 111 offline. Yet, the creator of the electronic document 111 is an exception and permitted to view the electronic document 111 up to two hours even while offline.

Note that in this system, no client is permitted offline viewing of any electronic document that is not permitted for online viewing.
Further, the administrator client 60 is permitted to view all electronic documents. In addition, it is known to the administrator that the device IDs of the user clients 40 and 50 are "ID_A" and "ID_B", respectively.

(5) Electronic Document Data Output Unit 105
   The electronic document data output unit 105 receives electronic document data from the text-field creating unit 103, and also receives viewing information from the viewing-information input unit 104.
   The electronic document data output unit 105 judges whether an electronic document contained in the received electronic document data is viewable exclusively by the administrator client 60 or also by one or more of the user clients. This judgment is made based on a piece of viewing information corresponding to the electronic document.

In the case where the electronic document is viewable only by the administrator client 60, the electronic document data output unit 105 transmits the electronic document data to the file server 30. On the other hand, if the electronic document is viewable also by one or more of the user clients, the electronic document data output unit 105 transmits the electronic document data to both the file servers 20 and 30.

The viewing information 120 corresponding to the electronic document 111 shows that the user clients 40 and 50 and the administrator client 60 are permitted to view the electronic document 111. Accordingly, the electronic document data output unit 105 outputs the electronic document data 110 to both the file servers 20 and 30.

### <Structure of File Server 20>

Upon receipt of electronic document data and viewing information from the document creation server 10, the file server 20 creates an electronic document file and stores the electronic document file therein. The electronic document file is created from the received electronic document data and viewing information, and to be later supplied to the user clients 40 and 50 and the administrator client 60.

Upon receipt of a request from a Web browser of a client, the file server 20 supplies the electronic document file stored therein to the client via the intranet 70.

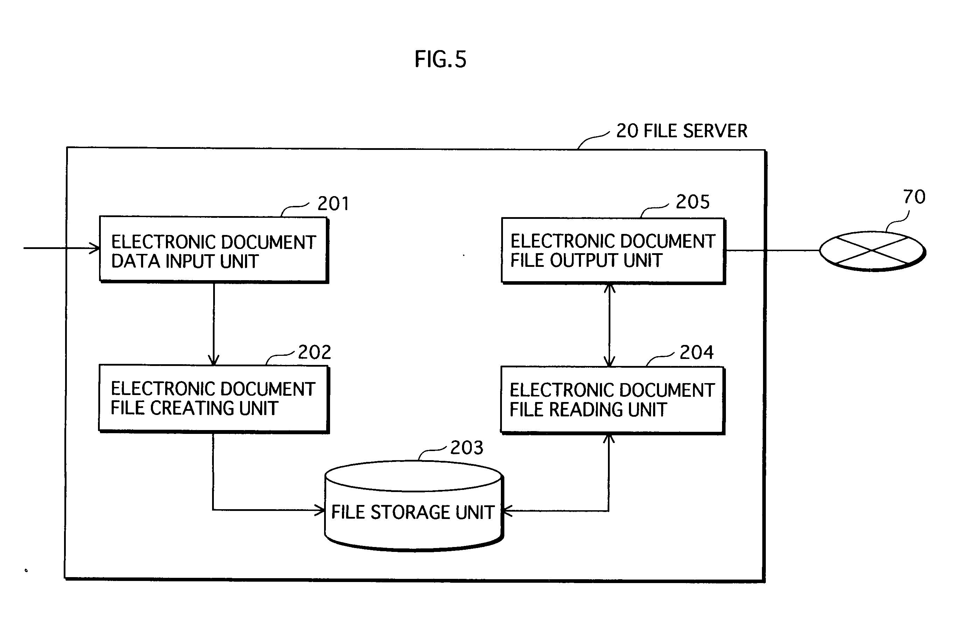

Fig. 5 shows the functional blocks of the file server 20. As shown in the figure, the file server 20 is composed of an electronic document data input unit 201, an electronic document file creating unit 202, a file storage unit 203, an electronic document file reading unit 204, and an electronic document file output unit 205.

Physically, the file server 20 is a computer system composed of a microprocessor, ROM, RAM, hard disk unit, network connection unit, and the like.
Hereinafter, a description is given to an example in which the file server 20 receives, from the document creation server 10, the electronic document data 110 shown in Fig. 3A and the viewing information 120 shown in Fig. 4.

(1) Electronic Document Data Input Unit 201
   The electronic document data input unit 201 is connected to the document creation server 10 via the LAN. The electronic document data input unit 201 receives the electronic document data 110 and the viewing information 120 from the document creation server 10 and outputs the received electronic document data 110 and viewing information 120 to the electronic document file creating unit 202.

(2) Electronic Document File Creating Unit 202
   Upon receipt of the electronic document data 110 and the viewing information 120 from the electronic document data input unit 201, the electronic document file creating unit 202 creates an electronic document file 210 from the received electronic document data 110 and viewing information 120, and stores the resulting electronic document file 210 into the file storage unit 203.

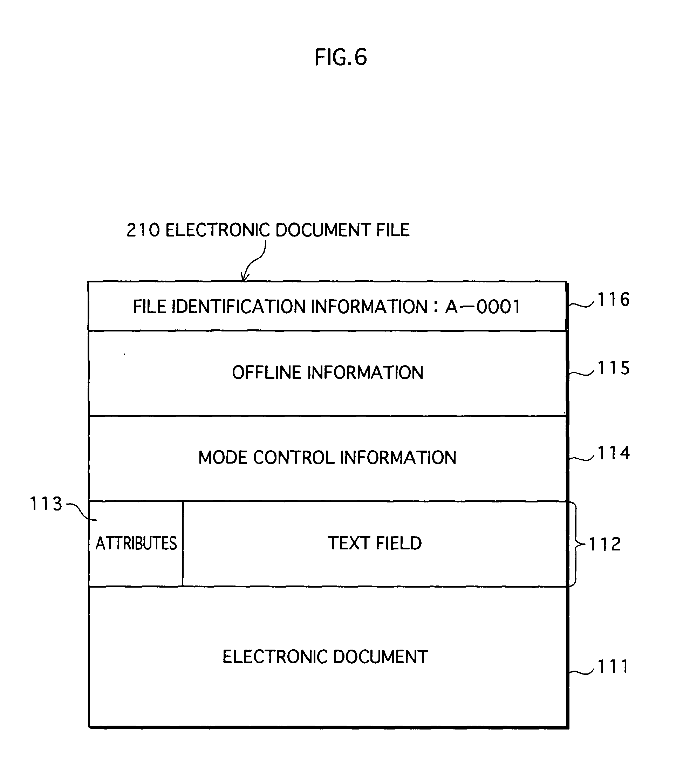

Fig. 6 shows the data structure of the electronic document file 210. As shown in the figure, the electronic document file 210 is composed of the electronic document 111, the text field 112, mode control information 114, offline information 115, and file identification information 116. The electronic document 111 and the text field 112 are the same data as that contained in the electronic document data 110, and thus the text field 112 has the attributes (initial setting) 113.

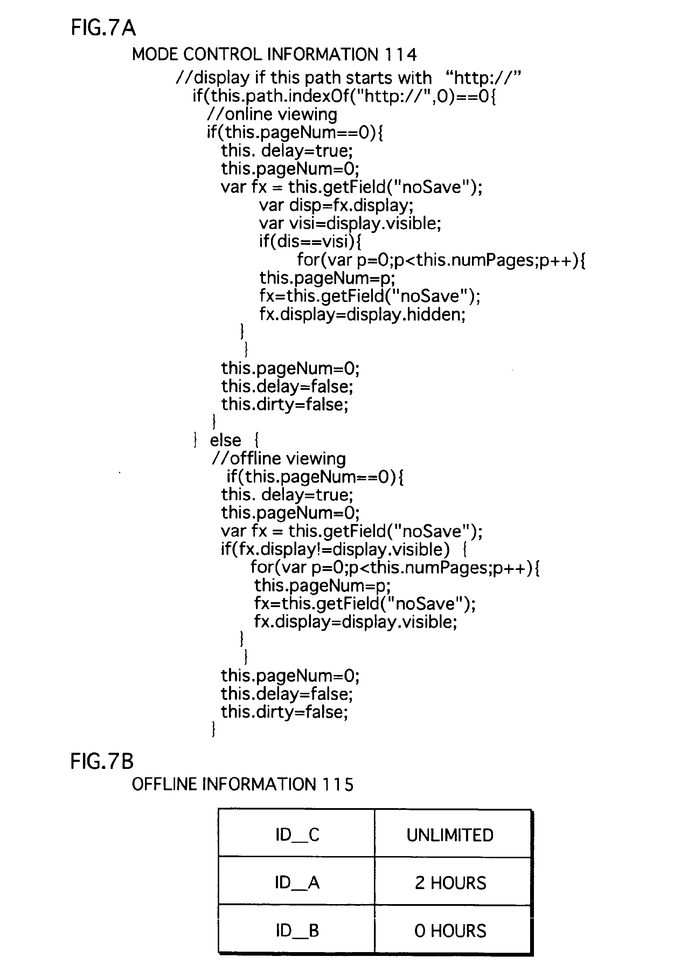

The electronic document file creating unit 202 creates the electronic document file 210 by manipulating the electronic document data 110 in the following manner. That is, the mode control information 114 (see Fig. 7A) is embedded, the offline information 115 (see Fig. 7B) is added with reference to the viewing information 120, and the file identification information 116 showing "A-0001" is added.
Fig. 7A shows part of the mode control information 114. The mode control information 114 is a program written in a script language for causing the following instructions (A1) through (C1) to be executed when a client opens the electronic document file 210 using viewer software.

(A1) To judge whether the path of the electronic document file 210 starts with "http://".
(B1) To set the display mode attribute to "Transparent" if the path starts with "http://".
(C1) To set the display mode attribute to "Non-Transparent" if the path does not start with "http://".
   Fig. 7B shows the data structure of the offline information 115. The electronic document file creating unit 202 creates the offline information 115 by extracting from the received viewing information 120 the device ID and the permitted offline viewing time.

The electronic document file creating unit 202 adds the file identification information "A-0001" identifying the electronic document file 210.
The electronic document file creating unit 202 then stores the resulting electronic document file 210 into the file storage unit 203.
(3) File Storage Unit 203
   Physically, the file storage unit 203 is an HDD and stores the electronic document file 210 received from the electronic document file creating unit 202.

(4) Electronic Document File Reading Unit 204
   The electronic document file reading unit 204 receives file identification information via the electronic document file output unit 205. The electronic document file reading unit 204 reads from the file storage unit 203 an electronic document file identified by the file identification information. The read electronic document file is output to the electronic document file output unit 205.

(5) Electronic Document File Output Unit 205
   The electronic document file output unit 205 receives a request containing file identification information via the intranet 70 from the user clients 40 and 50 and the administrator client 60. Upon receipt, the electronic document file output unit 205 outputs the file identification information contained in the received request to the electronic document file reading unit 204. In addition, the electronic document file output unit 205 receives an electronic document file from the electronic document file reading unit 204 and transmits via the intranet 70 the received electronic document file to the client that issued the request.

### <Structure of File Server 30>

Similarly to the file server 20, the file server 30 receives electronic document data and viewing information from the document creation server 10, creates an electronic document f ile, and stores the electronic document file therein. The electronic document file is created from the received document data and viewing information, and to be supplied to the administrator client 60.

Also similarly to the file server 20, the file server 30 receives a request from a Web browser of a client, and supplies a requested one of the stored electronic document files to the client via the intranet 70.
The file server 30 is composed of an electronic document data input unit, an electronic document file creating unit, a file storage unit, an electronic document file reading unit, and an electronic document file output unit. Each unit of the file server 30 is identical in functionality to a corresponding unit of the file server 20. Thus, the functional blocks of the file server 30 are not illustrated in the figure and a detailed description thereof is omitted.

Hereinafter, a description is given to the electronic document file creating unit of the server 30 by way of an example in which the electronic document data 110 shown in Fig. 3A and the viewing information 120 shown in Fig. 4 are received from the document creation server 10. In the description, the focus is given to the difference with the file server 20.
The electronic document file creating unit receives the electronic document data 110 and the viewing information 120 from the electronic document data input unit, creates an electronic document file 220 from the received electronic document data 110 and viewing information 120, and stores the resulting electronic document file 220 into the file storage unit.

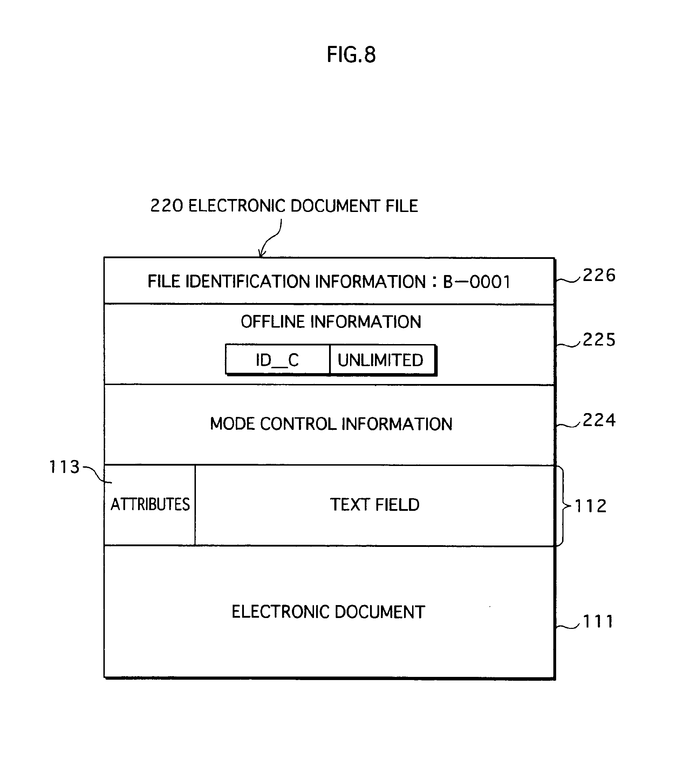

Fig. 8 shows the data structure of the electronic document file 220. As shown in the figure, the electronic document file 220 is composed of the electronic document 111, the text field 112, mode control information 224, offline information 225, and file identification information 226. The electronic document 111 and the text field 112 are the same data as that contained in the electronic document data 110, and thus the text field 112 has the attributes (initial setting) 113.

The electronic document file creating unit creates the electronic document file 220 by manipulating the electronic document data 110 in the following manner. That is, the mode control information 224 is embedded, the offline information 225 is added with reference to the viewing information 120, and the file identification information 226 showing "B-0001" is added.
The mode control information 224 is a program written in a script language for causing the following instructions (A2) through (E2) to be executed when a client opens the electronic document file 220 using viewer software.

(A2) To judge whether the path of the electronic document file 220 starts with "http://".
(B2) To set the display mode attribute to "Non-Transparent" if the path does not start with "http://".
(C2) To make a judgment about the client's device ID if the path starts with "http://".
(D2) To set the display mode attribute to "Non-Transparent" if the device ID does not match "ID_C".
(E2) To set the display mode attribute to "Transparent" if the device ID matches "ID_C".

Also, the electronic document file creating unit creates the offline information 225 by extracting, from the received viewing information 120, the device ID "ID_C" identifying the administrator client 60 and the permitted offline viewing time.
Also, the electronic document file creating unit adds the file identification information "B-0001" identifying the electronic document file 220.

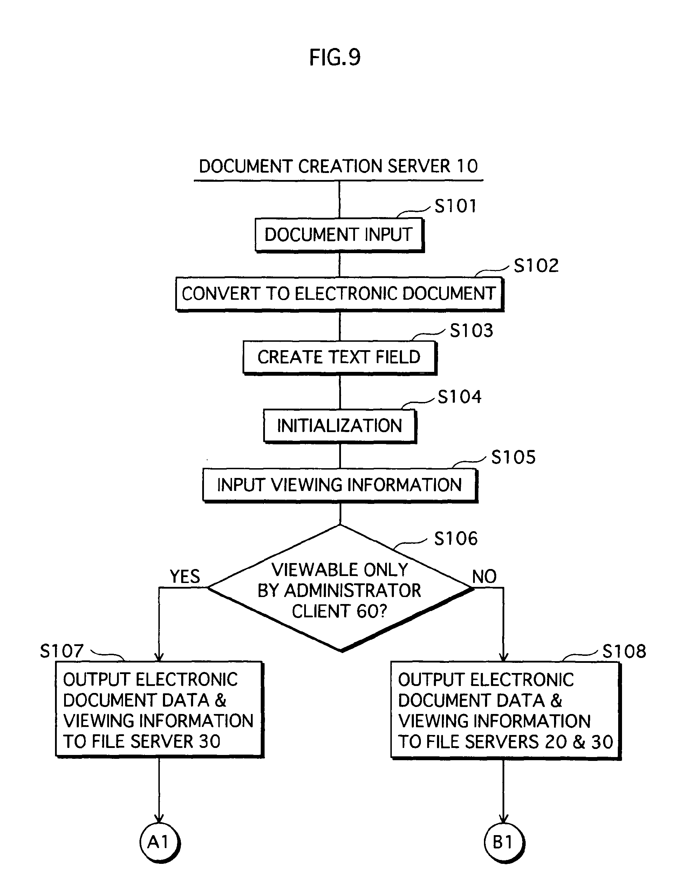

The electronic document file creating unit then stores the resulting electronic document file 220 into the file storage unit.
<Electronic Document File Creation>
Here, a description is given to processing steps performed by the electronic document viewing system 1 for creating an electronic document file. In the description, flowcharts shown in Figs. 9-11 are referenced.

First, a description is given to processing steps performed by the document creation server 10, with reference to the flowchart shown in Fig. 9.
The document input unit 101 of the document creation server 10 receives a document (step S101), and outputs the received document to the electronic document creating unit 102. Upon receipt of the document from the document input unit 101, the electronic document creating unit 102 converts the received document to create an electronic document (step S102). The electronic document creating unit 102 outputs the resulting electronic document to the text-field creating unit 103.

Upon receipt of the electronic document from the electronic document creating unit 102, the text-field creating unit 103 creates a text field (step S103), and sets the attributes 113 of the text field to the default values (step S104). The text-field creating unit 103 outputs electronic document data that is composed of the electronic document and the text field having the attributes 113 , to the electronic document data output unit 105.

The viewing-information input unit 104 receives viewing information (step S105), and outputs the received viewing information to the electronic document data output unit 105.
The electronic document data output unit 105 receives the electronic document data from the text-field creating unit 103 and the viewing information from the viewing-information input unit 104. The electronic document data output unit 105 reads the viewing information to judge whether the electronic document is viewable exclusively by the administrator client 60 (step S106). If the electronic document is viewable only by the administrator client 60 (step S106:YES), the electronic document data output unit 105 transmits the electronic document and the viewing information to the file server 30 via the LAN (step S107). If the electronic document is viewable by one or more clients in addition to the administrator client 60 (step S106: NO), the electronic document data output unit 105 transmits the electronic document and the viewing information to both the file servers 20 and 30 via the LAN (step S108).

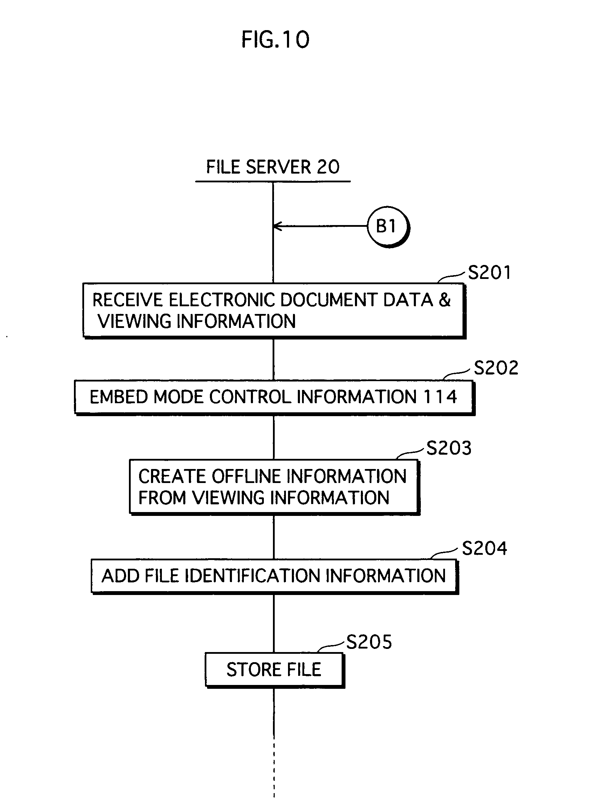

Next, a description is given to processing steps performed by the file server 20, with reference to the flowchart shown in Fig. 10. The processing steps described hereinafter are performed following the step S108 shown in Fig. 9.
The electronic document data input unit 201 of the file server 20 receives the electronic document data and the viewing information from the document creation server 10 (step S201), and outputs the received electronic document data and the viewing information to the electronic document file creating unit 202.

Upon receipt of the electronic document data and the viewing information from the electronic document data input unit 201, the electronic document file creating unit 202 embeds the mode control information 114 into the electronic document data (step S202). Further, the electronic document file creating unit 202 extracts, from the viewing information, every device ID identifying a client permitted to view the electronic document online, along with a permitted of f line viewing time corresponding to each device ID. Using the thus extracted information, the electronic document file creating unit 202 creates offline information (step S203). Further, the electronic document file creating unit 202 adds file identification information (step S204) and creates an electronic document file composed of the electronic document, the text field, the mode control information, the offline information, and the file identification information. The resulting electronic document file is stored into the file storage unit 203 (step S205).

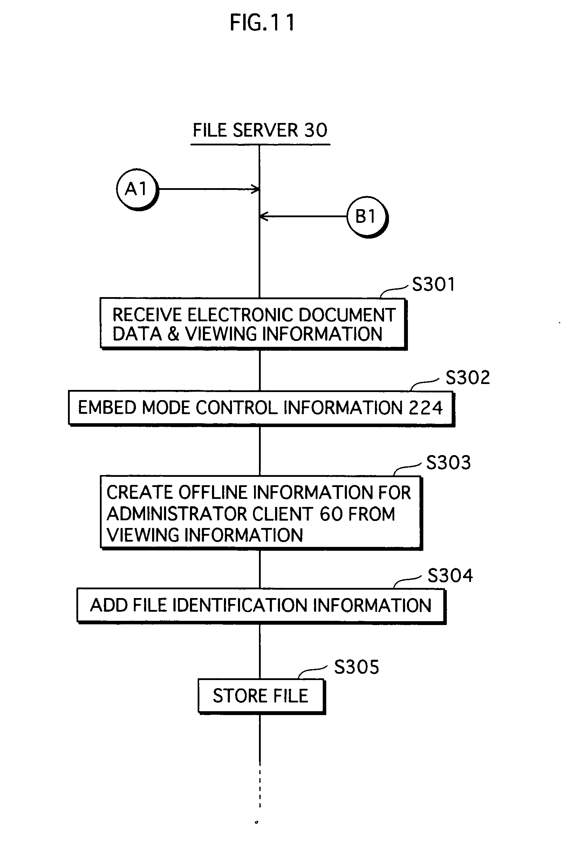

Next, a description is given to processing steps performed by the file server 30, with reference to the flowchart shown in Fig. 11. The processing steps described hereinafter are performed following the steps S107 and S108 shown in Fig. 9.
The electronic document data input unit of the file server 30 receives the electronic document data and the viewing information from the document creation server 10 (step S301), and outputs the received electronic document data and viewing information to the electronic document file creating unit.

Upon receipt of the electronic document data and the viewing information from the electronic document data input unit, the electronic document file creating unit embeds the mode control information 224 into the electronic document data (step S302). Further, the electronic document creating unit extracts, from the viewing information, the device ID of the administrator client 60 that is permitted to view the electronic document online, along with the permitted offline viewing time. Using the thus extracted information, the electronic document creating unit creates offline information (step 303). Further, the electronic document creating unit adds file identification information (step S304) and creates an electronic document file composed of the electronic document, the text field, the mode control information, the offline information, and the file identification information. The resulting electronic document file is stored into the file storage unit (step S305).

### <Structure of User Client 40>

Hereinafter, a description is given to the structure of the user client 40. Note that the user client 40 is owned by the user who created the electronic document 111.

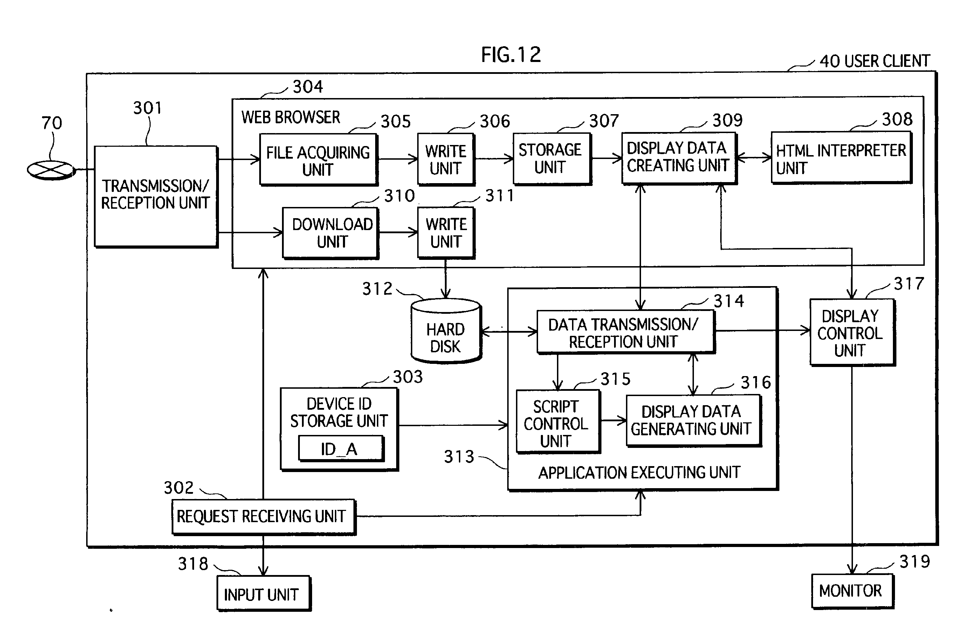

Fig. 12 shows the functional blocks of the user client 40.
As shown in the figure, the user client 40 is composed of a transmission/reception unit 301, a request receiving unit 302, a device ID storage unit 303, a Web browser 304, a hard disk 312, an application executing unit 313, a display control unit 317, an input unit 318, and a monitor 319.

The Web browser 304 includes a file acquiring unit 305, a write unit 306, a storage unit 307, an HTML interpreter unit 308, a display data creating unit 309, a download unit 310, and a write unit 311.
The application executing unit 313 includes a data transmission/reception unit 314, a script control unit 315, and a display data generating unit 316.

Physically, the user client 40 is a computer system composed of a microprocessor, ROM, RAM, hard disk unit, network connection unit, keyboard, mouse, and the like. The user client 40 acquires and displays an electronic document file by the microprocessor executing a computer program. Hereinafter, a description is given to each unit.

(1) Transmission/Reception Unit 301
   The transmission/reception unit 301 is a network connection unit and performs data transmission via the intranet 70 from the Web browser 304 to the file servers 20 and 30, and vice versa.
(2) Request Receiving Unit 302
   The request receiving unit 302 receives input signals from the input unit 318. Examples of input signals relating to viewing of an electronic document include a browser request, a download request, and a display request. A browser request requests online viewing of an electronic document. A download request requests to download an electronic document. A display request requests to display (view) an electronic document already downloaded.

Upon receipt of a browser request, the request receiving unit 302 informs the Web browser 304 of the receipt. Upon receipt of a download request, the request receiving unit 302 informs the Web browser 304 of the receipt. Upon receipt of a display request, the request receiving unit 302 informs the Web browser 304 of the receipt.
Each of the browser, download, and display requests includes file identification information uniquely identifying an electronic document file.

(3) Device ID Storage Unit 303
   The device ID storage unit 303 has an area for storing the device ID "ID_A". The device ID "ID_A" is information unique to the user client 40 and used by the application executing unit, which will be described later, when viewing an electronic document. In one example, the device ID storage unit 303 stores therein the device ID "ID_A" by read it from an IC card.

(4) Web Browser 304
   The Web browser 304 is application software used for viewing Web Pages. The Web browser 304 carries out communications via the intranet 70 using the HTTP protocol to receive such files as electronic document files, HTML files, image files, and music files, and analyzes the layout of received file to produce a screen display or playback.

The file acquiring unit 305 receives a browser request from the request receiving unit 302. In this example, the received browser request includes file identification information "A-0001". The file acquiring unit 305 transmits the received browser request to the file server 20 via the transmission/reception unit 301 and the intranet 70. In return, the file acquiring unit 305 receives from the file server 20 the electronic document file 210, which is identified by the file identification information "A-0001", and then causes the write unit 306 to write the electronic document file 210 into the storage unit 307. The storage unit 307 is a memory for temporarily storing the electronic document file 210.

The HTML interpreter unit 308 interprets the HTML hypertext acquired by the display data creating unit 309 from the storage unit 307.
Upon acquisition of the electronic document file 210 from the storage unit 307, the display data creating unit 309 outputs the acquired electronic document file 210 to the data transmission/reception unit 314 of the application executing unit 313. Then, from the data transmission/reception unit 314, the display data creating unit 309 receives electronic document data, together with the setting of display layout. Upon receipt of the electronic document data from the data transmission/reception unit 314, the HTML interpreter unit 308 and the display data creating unit 309 creates display data for monitor output, and outputs the resulting display data to the display control unit 317.

In the case where the file acquiring unit 305 acquires an ordinal HTML file other than electronic document files, the Web browser 304 causes the HTML interpreter unit 308 and the display data creating unit 309 to create display data for output to the monitor 319, and outputs the resulting display data to the display control unit 317.
The download unit 310 receives a download request from the request receiving unit 302. In this example, the download request includes the file identification information "A-0001". Upon receipt, the download unit 310 transmits the received download request to the file server 20 via the transmission/reception unit 301 and the intranet 70. In return, the download unit 310 receives the electronic document file 210 identified by the file identification information "A-0001" from the file server 20, and causes the write unit 311 to write the received electronic document file 210 into the hard disk 312.

In the similar manner, the file acquiring unit 305 and the download unit 310 can acquire the electronic document file 220 identified by the file identification information "B-0001" from the file server 30.
(5) Hard Disk 312
   The hard disk 312 receives, via the write unit 311, the electronic document file 210 or 220 acquired from the file server 20 or 30 by the download unit 310 of the Web browser 304, and stores the received electronic document file. In addition, when instructed by the application executing unit 313, the hard disk 312 outputs instructed one of the electronic document files 210 and 220 to the application executing unit 313.

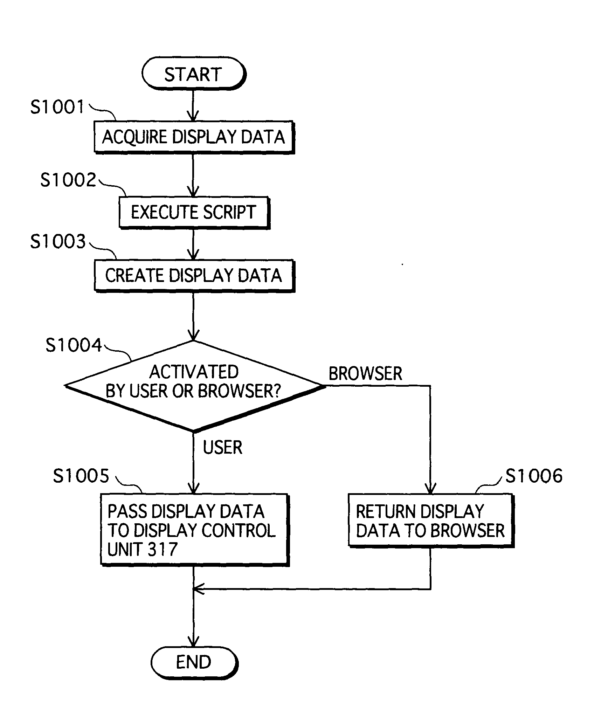

(6) Application Executing Unit 313
   Specifically, the application executing unit 313 is implemented by, for example, electronic document viewer software. As shown in Fig. 12, the application executing unit 313 includes the data transmission/reception unit 314, the script control unit 315, and the display data generating unit 316.
   Hereinafter, a description is given to the overall operation of the application executing unit 313, with reference to a flowchart shown in Fig. 13.

The data transmission/reception unit 314 of the application executing unit 313 acquires, from the display data creating unit 309 of the Web browser 304 or the hard disk 312, data which will be used as a base for generating display data to be presented on the monitor 319 (step S1001).
The data transmission/reception unit 314 outputs the data acquired in the step S1001 to the script control unit 315. The script control unit 315 then executes the script included in the acquired data (step S1002). The display data generating unit 316 generates display data based on the result obtained by executing the script (step S1003).

If the application executing unit 313 has been activated by a user (step S1004: User), the display data generating unit 316 passes the generated display data to the display data generating unit 316 via the data transmission/reception unit 314 (step S1005).
If the application executing unit 313 has been activated by the Web browser 304 (step S1004: Browser), the display data generating unit 316 returns the generated display data to the Web browser 304 (step S1006).

Next, a description is given separately to the cases where the application executing unit 313 generates display data in response to a browser request and to a display request issued by a user.
<Browser Request>
To generate display data in response to a browser request, the data transmission/reception unit 314 of the application executing unit 313 receives an electronic document file (the electronic document file 210, in this example) from the display data creating unit 309, and outputs the received electronic document file 210 to the script control unit 315.

The script control unit 315 reads the mode control information 114 from the electronic document file 210 and executes the mode control information 114 to set the attributes of the text field 112. The script control unit 315 then outputs the electronic document 111 and the text field 112 to the display data generating unit 316. Here, the text field 112 has the attributes set by the script control unit 315 to the following values: "Background Color: White", "Write Mode: Protected", "Display Mode: Transparent", and "Print Mode: Printable".

In accordance with the setting of the attributes, the display data generating unit 316 generates display data for presenting the transparent text field 112 overlaid on the electronic document 111, and outputs the resulting display data to the data transmission/reception unit 314.
The data transmission/reception unit 314 receives the display data from the display data generating unit 316 and outputs the display data to the monitor 319 via the display control unit 317.

<Display Request>
When generating display data in response to a display request, the application executing unit 313 receives from the request receiving unit 302 a display request containing file identification information. In this example, the application executing unit 313 receives the display request containing the file identification information "A-0001". In response, the data transmission/reception unit 314 of the application executing unit 313 reads the electronic document file 210 identified by the file identification information "A-0001" from the hard disk 312 and outputs the electronic document file 210 to the script control unit 315.

The script control unit 315 reads the mode control information 114 from the electronic document file 210 and executes the mode control information 114 to set the attributes of the text field 112. The script control unit 315 then outputs the electronic document 111 and the text field 112 to the display data generating unit 316. Here, the text field 112 has the attributes set by the script control unit 315 to the following values: "Background Color: White", "Write Mode: Protected", "Display Mode: Non-Transparent", and "Print Mode: Printable".

Further, the application executing unit 313 reads the device ID "ID_A" from the device ID storage unit 303 and outputs the read device ID to the display data generating unit 316.
The display data generating unit 316 judges whether the offline information 115 included in the electronic document file 210 received from the script control unit 315 shows the device ID "ID_A". In this example, the device ID "ID_A" is shown in the offline information 115.

The display data generating unit 316 then reads the offline information 115 to find out the permitted offline viewing time associated with the device ID "ID_A" is "2 Hours". Upon acquisition of the information that the permitted offline viewing time is "2 Hours", the display data generating unit 316 resets the internal timer and starts measuring a total offline viewing time.
The display data generating unit 316 periodically checks the total offline viewing time being measured by the timer. As long as the total offline viewing time is within the permitted offline viewing time of "2 Hours", the display data generating unit 316 sets the attribute of the text field 112 to the "Transparent" display mode. Thus, the display data generating unit 316 outputs the transparent text field 112 overlaid on the electronic document 111 to the data transmission/reception unit 314. When the total offline viewing time measured by the timer exceeds the permitted offline viewing time of "2 Hours", the display data generating unit 316 sets the attribute to the "Non-Transparent" display mode, and thus outputs to the data transmission/reception unit 314 the non-transparent text field 112 overlaid on the electronic document 111.

Next, a discussion is give to the case where the application executing unit 313 receives from the request receiving unit 302 a display request containing the file identification information "B-0001". Upon receipt of the display request, the data transmission/reception unit 314 of the application executing unit 313 reads from the hard disk 312 the electronic document file 220 which is identified by the file identification information "B-0001", and passes the read electronic document file 220 to the script control unit 315. The script control unit 315 then executes the script to set the attributes of the text field 112, and outputs to the display data generating unit 316 the electronic document file 220 including the text field 112 having the attributes set by the script control unit 315. Further, the application executing unit 313 reads the device ID "ID_A" from the device ID storage unit 303 and outputs the read device ID to the display data generating unit 316.

The display data generating unit 316 judges whether the offline information 225 included in the electronic document file 220 shows the device ID "ID_A". In this example, the offline information 225 does not show the device ID "ID_A". Accordingly, the display data generating unit 316 sets the attribute to the "Non-Transparent" display mode, and thus outputs to the data transmission/reception unit 314 the non-transparent text field 112 overlaid on the electronic document 111.

(7) Display Control Unit 317
   Upon receipt of display data from the display data creating unit 309 of the Web browser 304 or from the display data generating unit 316 of the application executing unit 313, the display control unit 317 outputs the received display data to the monitor 319.
(8) Input Unit 318
   The input unit 318 is composed mainly of a keyboard and a mouse. When operated by a user, the input unit 318 generates an input signal indicative of the user operation, and sends the input signal to the request receiving unit 302.

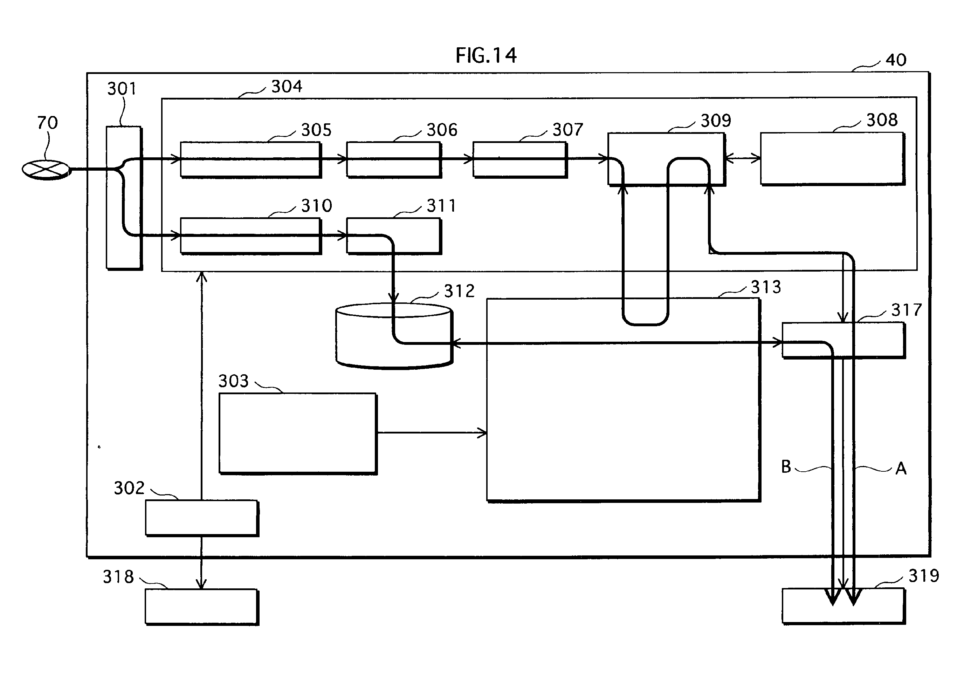

(9) Monitor 319
   The monitor 319 is a display device and displays on the monitor screen various types of display data received from the display control unit 317.
   <Difference between Online and Offline> Fig. 14 shows the flows of data for online viewing and offline viewing of an electronic document, in order to illustrate the difference between them. In the figure, the same reference numerals are used as in Fig. 12 to denote the units of the user client 40.

The arrow A represents the flow of data for online viewing of an electronic document. For online viewing, the Web browser 304 of the user client 40 acquires an electronic document file from a file server via the intranet 70. The electronic document file acquired by the file acquiring unit 305 is output to the application executing unit 313 sequentially via the write unit 306, the storage unit 307, and the display data creating unit 309. Regarding the received electronic document file, the application executing unit 313 sets the attributes of the text field, and also sets the layout of the electronic document. The electronic document file is then returned from the application executing unit 313 to the display data creating unit 309 of the Web browser 304. Finally, the electronic document file is output to the monitor 319 via the display control unit 317.

The arrow B in the figure represents the flow of data for offline viewing of an electronic document. For offline viewing of an electronic document, the Web browser 304 of the user client 40 acquires an electronic document file from a file server via the intranet 70. The electronic document file acquired by the download unit 310 is written to the hard disk 312 by the write unit 311. When a display request is later received, the electronic document file is read to the application executing unit 313 and then output to the monitor 319 via the display control unit 317.

### <Structure of User Client 50>

Similarly to the user client 40 shown in Fig. 12, the user client 50 is composed of a transmission/reception unit, a request receiving unit, a device ID storage unit, a Web browser, an application executing unit, a hard disk, an input unit, and a monitor. The Web browser includes a file acquiring unit and a download unit. The application executing unit includes a data transmission/reception unit, a script control unit, and a display data generating unit. Note that the functional brocks of the user client 50 are not illustrated in the figures.

Physically, the user client 50 is a computer system. The user client 50 acquires and displays an electronic document file by its microprocessor executing a computer program.
The processing steps performed by the Web browser and the application executing unit for online viewing of an electronic document are similar to those performed by the user client 40.

The device ID storage unit stores the device ID "ID_B" which is information unique to the user client 50. Similarly to the device ID storage unit of the user client 40, it is applicable to constitute the device ID storage unit to read the device ID "ID_B" from a recording medium, such as an IC card.
Upon receipt of a display request containing the file identification information "A-0001" from the request receiving unit, the application executing unit reads the electronic document file 210 from the hard disk and also reads the device ID "ID_B" from the device ID storage unit.

The script control unit of the application executing unit executes the script included in the electronic document file 210 to set the attributes of the text field 112. The display data generating unit of the application executing unit receives from the script control unit the electronic document file 210 having the attributes of the text field 112 set by the script control unit. The display data generating unit then judges whether the offline information 115 (see Fig. 7B) included in the electronic document file 210 shows the device ID "ID_B". In this example, since the offline information 115 shows the device ID "ID_B", the display data generating unit acquires that the permitted offline viewing time associated with the device ID "ID_B" is "0 Hours". Upon acquisition of the information showing that the permitted offline viewing time is "0 Hours", the display data generating unit resets the internal timer and starts measuring the total offline viewing time.

As long as the total offline viewing time measured by the timer is within the permitted offline viewing time, the display data generating unit sets the attribute of the text field 112 to the "Transparent" display mode, and thus outputs to the data transmission/reception unit the transparent text field 112 overlaid on the electronic document 111. When the total offline viewing time measured by the timer exceeds the permitted offline viewing time, the display data generating unit sets the attribute to the "Non-Transparent" display mode, and thus outputs to the data transmission/reception unit the non-transparent text field 112 overlaid on the electronic document 111.

The application executing unit also performs similar processing steps upon receipt of the electronic document file 220 from the hard disk.
Note in the specific example above, the permitted offline viewing time is "0 Hours". Thus, the total offline viewing time measured by the timer already exceeds the permitted viewing time at the onset of the processing. Thus, the display data generating unit always sets the text field 112 to the "Non-Transparent" display mode. Thus, the electronic document 111 is hidden by the non-transparent text field 112, so that the user can not view the electronic document 111 offline.

### <Structure of Administrator Client 60>

Similarly to the user client 40 shown in Fig. 12, the administrator client 60 is composed of a transmission/reception unit, a request receiving unit, a device ID storage unit, a Web browser, an application executing unit, a hard disk, an input unit, and a monitor. The Web browser includes a file acquiring unit and a download unit. The application executing unit includes a data transmission/reception unit, a script control unit, and a display data generating unit. Note that the functional brocks of the administrator client 60 are not illustrated in the figures.

Physically, the administrator client 60 is a computer system. The administrator client 60 acquires and displays an electronic document file by its microprocessor executing a computer program.
The processing steps performed by the Web browser and the application executing unit for online viewing of an electronic document are similar to those performed by the user client 40.

The device ID storage unit stores the device ID "ID_C" which is information unique to the administrator client 60.
Upon receipt of a display request containing the file identification information "A-0001" from the request receiving unit, the application executing unit reads the electronic document file 210 from the hard disk and also reads the device ID "ID_C" from the device ID storage unit.

The script control unit executes the script included in the electronic document file 210 to set the attributes of the text field 112. The display data generating unit receives from the script control unit the electronic document file 210 having the attributes of the text field 112 set by the script control unit. The display data generating unit then judges whether the offline information 115 included in the electronic document file 210 shows the device ID "ID_C". In this example, since the offline information 115 shows the device ID "ID_C", the display data generating unit acquires information showing that the permitted offline viewing time associated with the device ID "ID_C" is "Unlimited". Upon acquisition of the information showing that the permitted offline viewing time is "Unlimited", the display data generating unit resets the internal timer and starts measuring the total offline viewing time.

As long as the total offline viewing time measured by the timer is within the permitted offline viewing time, the display control unit sets the text field 112 to the "Transparent" display mode, and thus outputs to the data transmission/reception unit the transparent text field 112 overlaid on the electronic document 111. When the total offline viewing time measured by the timer exceeds the permitted offline viewing time, the display control unit sets the text field 112 to the "Non-Transparent" display mode, and thus outputs to the data transmission/reception unit the non-transparent text field 112 overlaid on the electronic document 111.

Note in the specific example above, the permitted offline viewing time is "Unlimited". Thus, the display data generating unit always sets the text field 112 to the "Transparent" display mode. Thus, the electronic document 111 is not hidden by the text field 112, so that the administrator can always view the electronic document 111 offline.
The application executing unit also performs similar processing steps upon receipt of the electronic document file 220 from the hard disk.

### <Electronic Document File Viewing>

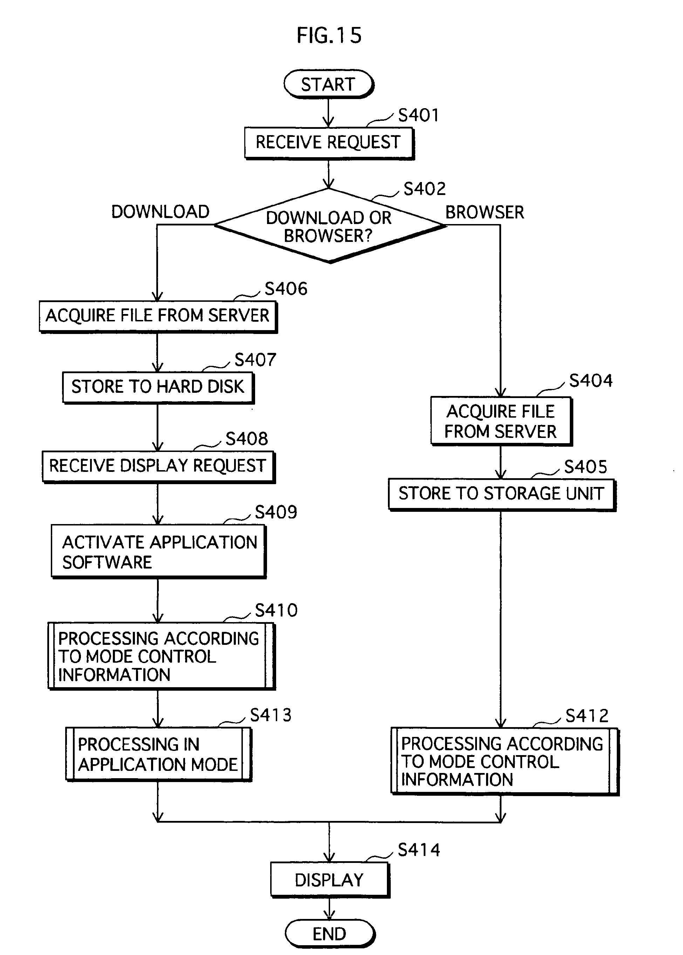

Here, with reference to a flowchart shown in Fig. 15, a description is given to processing steps performed by the user client 40, the user client 50, and the administrator client 60, for allowing the user to view an electronic document file. Note that in the description below, each of the user client 40, the user client 50, and the administrator client 60 is simply referred to as a "client".

The request receiving unit of the client receives a request via the input unit (step S401). If the received request is a browser request (step S402: Browser), the request receiving unit outputs the browser request that contains file identification information to the Web browser. The file acquiring unit of the Web browser acquires an electronic document file from a file server (step S404). The electronic document file acquired is the one identified by the file identification information contained in the browser request. The file acquiring unit stores the thus acquired electronic document file to the storage unit (step S405).

The electronic document file once stored to the storage unit is output to the application executing unit via the display data creating unit. Upon receipt of the electronic document file, the application executing unit conducts processing in accordance with the mode control information included in the electronic document file (step S412).
If the request received in the step S401 is a download request (step S402: Download), the request receiving unit outputs the download request containing file identification information to the Web browser. The download unit of the Web browser acquires an electronic document file from the file server (step S406). The electronic document file acquired is the one identified by the file identification information contained in the download request. The write unit stores the electronic document file acquired by the download unit to the hard disk (step S407).

When later receiving a display request (step S408), the display request unit outputs the display request containing the file identification information to the application executing unit, thereby to activate application software (step S409). The application executing unit conducts processing in accordance with the mode control information included in the electronic document file (step S410), and then conducts processing in the application mode (step S413).

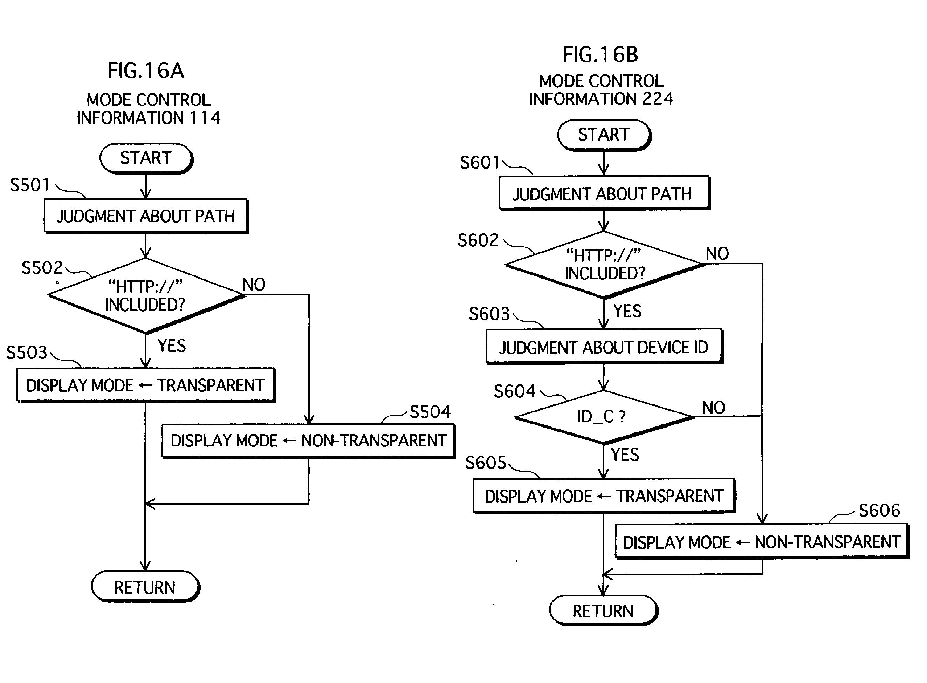

Then, the monitor displays on the monitor screen the display data received from the display control unit (step S414).
<Processing Caused by Mode Control Information 114>
Now, with reference to a flowchart shown in Fig. 16A, a description is given to processing steps performed in accordance with the mode control information 114. The mode control information 114 is a program embedded by the file server 20 into electronic document data. Note that the processing steps described herein are the details of the steps S410 and S412 of the flowchart shown in Fig. 15.

The script control unit makes a judgment regarding the path of the electronic document file (step S501). If the path starts with the character string "http://" (step S502: YES), the script control unit sets the text field included in the electronic document file to the "Transparent" display mode (step S503). If the path does not start with "http://" (step S502: NO), the script control unit sets the text field to the "Non-Transparent" display mode (step S504). The script control unit then outputs the text field overlaid on the electronic document and goes back to Fig. 15 to continue the processing.

### <Processing Caused by Mode Control Information 224>

Now, with reference to a flowchart shown in Fig. 16B, a description is given to processing steps performed in accordance with the mode control information 224. The mode control information 224 is a program embedded by the file server 30 into electronic document data. Note that the processing steps described herein are the details of the steps S410 and S412 of the flowchart shown in Fig. 15.

The script control unit makes a judgment regarding the path of the electronic document file (step S601). If the path does not start with the character string "http://" (step S602: NO), the script control unit moves onto a step S606 to set the text field included in the electronic document file to the "Non-Transparent" display mode (step S606). The script control unit then outputs the text field overlaid on the electronic document and goes back to Fig. 15 to continue the processing.

If the path starts with the character string "http://" (step S602: YES), the script control unit acquires the device ID from the device ID storage unit and makes a judgment regarding the acquired device ID (step S603). If the acquired device IDmatches "ID_C" (step S604: YES), the script control unit sets the text field included in the electronic document file to the "Transparent"display mode (step S605). The script control unit then outputs the text field overlaid on the electronic document and goes back to Fig. 15 to continue the processing.

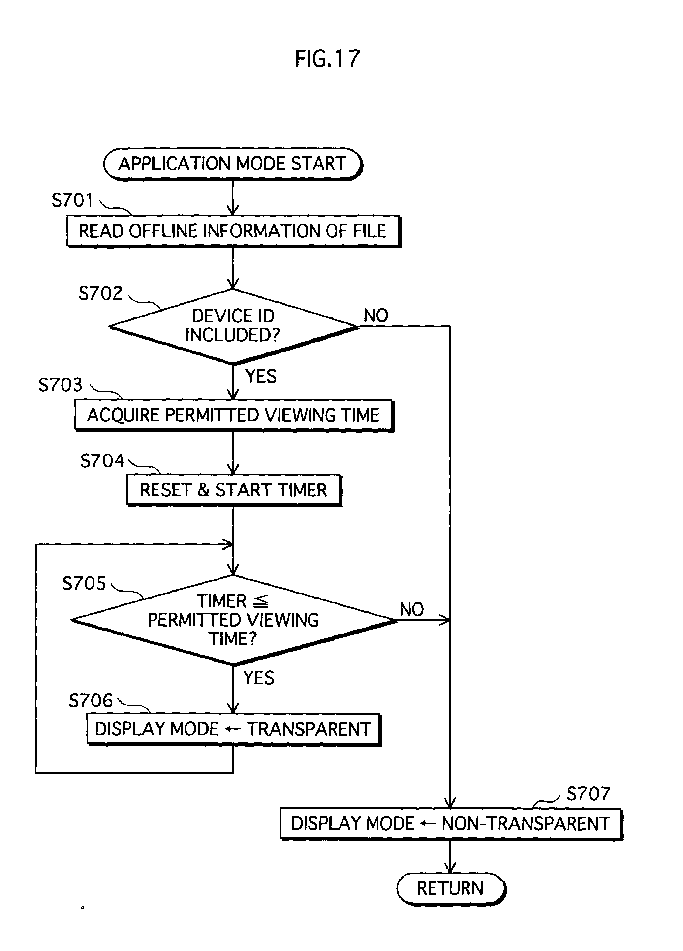

If the acquired device ID does not match "ID_C" (step S604: NO), the script control unit sets the text field to the "Non-Transparent" display mode (step S606). The script control unit then outputs the text field overlaid on the electronic document and goes back to Fig. 15 to continue the processing.
<Processing in Application Mode>
Now, a description is given to processing steps performed in the application mode, with reference to a flowchart shown in Fig. 17. Note that the processing steps described herein are the details of the step S413 shown in Fig. 15.

The application executing unit reads the offline information from the electronic document file (step S701), and also reads the device ID from the device ID storage unit. The application executing unit then judges whether the offline information read in the step S701 shows its own device ID read from the device ID storage unit (step S702). If the device ID is not shown in the offline information (step S702: NO), the application executing unit sets the attribute of the text field to the "Non-Transparent" display mode (step S707). The application executing unit then outputs the text field overlaid on the electronic document and goes back to Fig. 15 to continue the processing.

If the device ID is shown in the offline information (step S702:YES), the application executing unit acquires the permitted offline viewing time associated with the device ID (step S703), resets the internal timer, and starts measuring the total offline viewing time (step S704).
The application executing unit compares the total offline viewing time measured by the timer with the permitted offline viewing time acquired in the step S703. If the time measured by the timer is within the permitted offline viewing time (step S705: YES), the application executing unit sets the attribute of the text field to the "Transparent" display mode (step S706). The application executing unit then outputs the text field overlaid on the electronic document and goes back to the step S705 to continue the processing.

If the total offline viewing time measured by the timer exceeds the permitted offline viewing time (step S705: NO), the application executing unit sets the attribute of the text field to the "Non-Transparent" display mode (step S707). The application executing unit then outputs the text field overlaid on the electronic document and goes back to Fig. 15 to continue the processing.
<Attributes of Text Field>
Figs. 18 illustrate the respective display modes included in the attributes of the text field 112.

Fig. 18A shows the text field 112 and the electronic document 111 displayed on the monitor, in the case where the display mode is set to "Non-Transparent". Since the text field 112 overlaid on the electronic document 111 is non-transparent, the user cannot view the electronic document.
Fig. 18B shows the text field 112 and the electronic document 111 displayed on the monitor, in the case where the display mode is set to "Transparent". Since the text field 112 overlaid on the electronic document 111 is transparent, the user can view the electronic document through the transparent text field 112.

Now, a description is given specifically to a scheme for switching the display mode of the text field between "Non-Transparent" and "Transparent". The electronic document 111 is a sequence of bits representing combinations of "0" and "1", whereas the text field 112 is a sequence bits all representing "0".
In the "Non-Transparent" display mode, the application executing unit of the client multiples each bit of the electronic document 111 by a corresponding bit of the text field 112. In the "Transparent" display mode, the application executing unit of the client adds each bit of the electronic document 111 to a corresponding bit of the text field 112. In either display mode, the application executing unit generates a screen to be output on the monitor, from the computation results.

That is, the application executing unit holds a "multiplication" operator for the "Non-Transparent" display mode and an "addition" operator for the "Transparent" display mode. The application executing unit performs the computations selectively using one of the operators corresponding to the attribute ("Non-Transparent" or "Transparent") specified in the mode control information. As a result, the text field and the electronic document are displayed on the monitor in a manner illustrated in Figs. 18A and 18B.

<Recapitulation>
As has been described above, according to the present invention, the text field overlaid on the electronic document is made transparent for allowing online viewing of the electronic document. On the other hand, the text field is made non-transparent for prohibiting offline viewing of the electronic document.

In addition, according to the above embodiment, the two file servers, namely the file servers 20 and 30, are provided and each file server is structured to embed differentmode control information into an electronic document file. The file server 30 embeds mode control information for exclusively allowing the administrator client 60 to view the electronic document file both online and offline. The file server 20 embeds mode control information for unconditionally allowing the user clients 40 and 50, in addition to the administrator client 60, to view the electronic document file online. In addition, the mode control information embedded by the file server 20 unconditionally allows the administrator client 60 and conditionally allows the user clients 40 and 50 to view the electronic document file offline.

Consequently, when the electronic document data 110 created by the document creation server 10 is output to the file servers 20 and 30, electronic document files derived from the same electronic document data 110 can and cannot be viewed by the user clients 40 and 50, depending on whether the mode control information is embedded by the server 20 or 30. The electronic document file with the mode control information embedded by the file server 20 is viewable by the user clients 40 and 50, whereas the electronic document file with the mode control information embedded by the file server 30 is not viewable by the user clients 40 and 50.

As described above, the file server 30 stores every electronic document created by the document creation server 10 and exclusively allowing the administrator client 60 to view the electronic documents. With this arrangement, the system administrator is able to view all the electronic documents both online and offline even when the file server 20 is turned off for maintenance.
<Other Modifications>
Up to this point, the present invention has been described byway of the above specif ic embodiment. It should be appreciated, however, that the present invention is not limited to the above embodiment and various modifications including the following still fall within the scope of the present invention.

(1) The electronic documents mentioned in the above embodiment refer to PDF files containing technical information. Yet, it is naturally appreciated that the present invention is applicable to electronic documents other than such.
(2) According to the above embodiment, the document creation server 10 creates electronic documents, and the file servers 20 and 30 embed mode control information into the electronic documents to create files and manage the files. Each server is implemented by a separate computer system. Yet, the present invention is not limited to such configuration. The document creation server 10 and either of the file servers 20 and 30 may be implemented by a single computer system.

(3) According to the above embodiment, the file servers 20 and 30 are implemented by separate computer systems. Yet, the scope of the present invention covers the configuration in which both the file servers 20 and 30 are implemented by a single computer system.
(4) According to the present invention, the text field is overlaid to so as to cover and hide the entire electronic document. Yet, the present invention is not limited to such. The scope of the present invention includes such confutation that the text field is overlaid so as to cover and hide only part of the electronic document.

(5) In addition, it is applicable that the file servers 20 and 30 set the respective text fields so as to cover different parts of the electronic document. For example, it is applicable that the electronic document managed by the file server 20 is entirely covered by the text field, whereas the electronic document managed by the file server 30 is partly covered by the text field. This arrangement still falls within the scope of the present invention.

(6) In addition, it is applicable to set the text fields so as to cover different parts of the electronic document depending on the clients display the electronic documents. For example, it is applicable that the electronic document displayed by the user client 40 is only partly covered by the text field, the electronic document displayed by the user client 50 is entirely covered by the text field, and the electronic document displayed by the administrator client 60 is not covered by the text field at all. This arrangement still falls within the scope of the present invention.

(7) According to the present invention, the mode control information may contain an instruction for making a judgment regarding the absolute path or the relative path of the electronic document.
(8) According to the above embodiment, each client holds a unique device ID, and refers to the offline information using the device ID, and determines whether to set the text field to the "Transparent" display mode or to the "Non-Transparent" display mode. Yet, the present invention is not limited to such. It is applicable that a client receives user input of a user ID and password, for example, and sets the text field to the "Transparent" or "Non-Transparent" display mode using the input user ID and password. In this case, the offline information may be composed of a user ID, a password, and a permitted offline viewing time.

Similarly, in addition, according to the mode control information 224 embedded by the file server 30 into an electronic document file, it is determined whether the device ID matches the device ID unique to the administrator client 60 and sets the display mode according to the determination result. Yet, it is applicable to determine, instead of the device ID, an administrator ID and a password for identifying the administrator, and sets the display mode according to the determination result.

(9) According to the above embodiment, each client is allowed offline viewing of an electronic document for a predetermined time period. Yet, this arrangement is not an essential part of the present invention.
   It is applicable to allow the clients to view an electronic document only online and entirely prohibit offline viewing. This configuration still falls within the scope of the present invention. In this case, it is not necessary that the clients hold unique device IDs.

In addition, it is not necessary that the application executing unit of each client measures the total offline viewing time. In addition, regardless of whether an electronic document file is acquired in response to a display request or a browser request, the application executing unit may permit online viewing and prohibit offline viewing by operating in accordance with mode control information contained in the electronic document file.

(10) The present invention may be embodied as one or more methods described above. Also, the present invention may be embodied a computer program for causing a computer to execute one or more of the methods. Also, the present invention may be embodied as digital signals representing the computer program.
The present invention may also be embodied a computer-readable recording medium storing the computer program or digital signals. Example of such computer-readable recording mediums include a floppy disk, hard disk, CD-ROM, MO, DVD, DVD-ROM, DVD-RAM, BD (Blu-ray Disc), and semiconductor memory. The present invention may also be embodied as the computer program or the digital signals stored on such a recording medium.

The present invention may be embodied as the computer program or the digital signals transferred over a telecommunication line, a wired or wireless communication line, or a network typified by the Internet.
The present invention may be embodied as a computer system having a microprocessor and a memory. The memory stores the computer program mentioned above and the microprocessor operates in accordance with the computer program.

The program and the digital signal may be transported in the form of the recording medium or via, for example, the network, and executed by a separate independent computer system.
(11) The present invention may be any combination of the above embodiment and modifications.

### Industrial Applicability

The present invention is applicable to industries for supplying electronic documents to users. In one example, the present invention provides a system that hides an electronic document with a text field before payment by a user. After the payment, the system makes the text field transparent to allow the user to view the electronic document.

## Claims

1. A viewing apparatus comprising:
an acquiring unit operable to acquire an electronic document file containing a first layer defined to present a document image and a second layer defined to cover at least part of the first layer;
a control unit operable to set a display mode of the second layer depending on a pattern of viewing the electronic document file; and
a display unit operable to display the first and second layers, the second layer being displayed in the display mode set by the control unit and overlaid on the first layer.

2. The viewing apparatus according to Claim 1, wherein
the control unit includes:
a judging unit operable to judge whether the electronic document file is acquired over a network;
a setting unit operable to set the second layer to a transparent mode if the judgment is affirmative, and to a non-transparent mode if the judgment is negative; and
the display unit is operable to display the second layer transparently in the transparent mode so that the document image is visible, and display the second layer non-transparently in the non-transparent mode so that the document image is not visible.

3. The viewing apparatus according to Claim 2, wherein
the acquiring unit is operable to acquire the electronic document file containing:
a judgment instruction for judging whether the electronic document file is acquired over a network;
amode setting instruction for setting the second layer to the transparent mode if the judgment is affirmative and to the non-transparent mode if the judgment is negative; and
a display instruction for displaying the first and second layers with the second layer being overlaid on the first layer,
the judging unit is operable to execute the judgment instruction,
the setting unit is operable to execute the mode setting instruction, and
the display unit is operable to execute the display instruction.

4. The viewing apparatus according to Claim 3, wherein
the acquiring unit includes a Web browser, and
the judging unit is operable to determine whether a path of the electronic document file includes a predetermined character string, and judge that the electronic document file is acquired over a network if the predetermined character string is included and that the electronic document file is not acquired over a network if the predetermined character string is not included.

5. The viewing apparatus according to Claim 4, wherein
the judging unit is operable to determine whether a path of the electronic document file includes the predetermined character string "http://", and judge that the electronic document file is acquired over a network if the predetermined character string "http://" is included and that the electronic document file is not acquired over a network if the predetermined character string "http://" is not included.

6. The viewing apparatus according to Claim 4, wherein the judging unit includes:
a first determining unit operable to determine whether the path includes the predetermined character string "http://"; and
a second determining unit operable to determine whether the electronic document file is being executed using plug-in software or application software,
the judging unit is operable to judge that the electronic document file is acquired over a network if the first determining unit determines affirmatively and the second determining unit determines that plug-in software is used, and otherwise judge that the electronic document file is not acquired over a network.

7. The viewing apparatus according to Claim 6, wherein
the viewing apparatus stores first identification information identifying the viewing apparatus,
the electronic document file contains second identification information identifying an apparatus permitted to view the electronic document file;
the judging unit is operable to judge whether the first identification information matches the second identification information, and cause the first and second determining units to make the respective determinations when the first and second identification information matches, and
the control unit is operable to set the second layer to the non-transparent mode prior to the determinations by the first and second determining units if the first and second identification information does not match.

8. The viewing apparatus according to Claim 7, wherein
the electronic document file contains time information showing a predetermined time period, and
the control unit includes:
an offline control unit operable to set the second layer to the transparent mode even if the electronic document file is judged not acquired over a network, measure a time period during which the display unit displays the electronic document file, and set the second layer to the non-transparent mode when the measured time period reaches the predetermined time period shown by the time information.

9. The viewing apparatus according to Claim 2, wherein
the judging unit is operable to determine whether the electronic document file is being executed using plug- in software or application software, and judge that the electronic document file is acquired over a network if the plug-in software is used and that the electronic document file is not acquired over a network if the application software if used.

10. An electronic document file creating apparatus for creating an electronic document file configured to be displayed in a different mode depending on a pattern in which the electronic document file is viewed, comprising:
a storage unit operable to store a first layer defined to present a document image;
a second layer creating unit operable to create a second layer defined to cover at least part of the first layer;
a control information creating unit operable to create viewing control information for changing a display mode of the second layer depending on a viewing pattern; and
a creating unit operable to create an electronic document file containing the first layer, the second layer, and the viewing control information.

11. The electronic document file creating apparatus according to Claim 10, wherein
the control information creating unit is operable to create the viewing control information containing:
a judgment instruction for judging, when the electronic document file is displayed on a viewing apparatus, whether the electronic document file is supplied to the viewing apparatus over a network;
amode setting instruction for setting the second layer to a transparent mode if the judgment is affirmative and to a non-transparent mode if the judgment is negative; and
a display instruction for displaying the first and second layers with the second layer being overlaid on the first layer.

12. The electronic document file creating apparatus according to Claim 11, wherein
the judgment instruction is for determining whether a path of the electronic document file includes a predetermined character string, and judging that the electronic document file is supplied to the viewing apparatus over a network if the predetermined character string is included.

13. The electronic document file creating apparatus according to Claim 12, wherein
the judgment instruction is for determining whether a path of the electronic document file includes the predetermined character string "http://", and judging that the electronic document file is supplied to the viewing apparatus over a network if the predetermined character string "http://" is included.

14. The electronic document file creating apparatus according to Claim 13, wherein
the judgment instruction contains identification information identifying an apparatus that is permitted to view the electronic document file, and
the judgment instruction is for determining, using the identification information, whether the viewing apparatus is permitted to view the electronic document file, and determining whether the path includes the character string "http://" only when the viewing apparatus is determined to be permitted to view the electronic document file.

15. The electronic document file creating apparatus according to Claim 10, further comprising:
a document input unit operable to receive a document;
a first layer creating unit operable to create the first layer from the received document and stores the first layer to the storage unit;
a holding unit operable to store the electronic document file created by the creating unit;
a request receiving unit operable to receive a transmission request for the electronic document file from a viewing apparatus; and
a transmitting unit operable to, upon receipt of the transmission request, read the electronic document file from the holding unit and transmit the electronic document file to the viewing apparatus that issued the transmission request.

16. An electronic document file viewing system for supplying an electronic document file created by an electronic document file creating apparatus to a viewing apparatus that allows a user to view the electronic document file,
the electronic document file creating apparatus comprising:
a storage unit operable to store a first layer defined to present a document image;
a second layer creating unit operable to create a second layer defined to cover at least part of the first layer;
a control information creating unit operable to create viewing control information for changing a display mode of the second layer depending on a viewing pattern; and
a creating unit operable to create an electronic document file containing the first layer, the second layer, and the viewing control information, and
the viewing apparatus comprising:
an acquiring unit operable to acquire the electronic document file;
a control unit operable to set a display mode of the second layer depending on a pattern in which the electronic document file is viewed, as specified in the control information; and.
a display unit operable to display the first and second layers, the second layer being displayed in the display mode set by the control unit and overlaid on the first layer.

17. A viewing method for use by a viewing apparatus, comprising:
an acquiring step of acquiring an electronic document file containing a first layer defined to present a document image and a second layer defined to cover at least part of the first layer;
a control step of setting a display mode of the second layer depending on a pattern of viewing the electronic document file; and
a display step of displaying the first and second layers, the second layer being displayed in the display mode set in the control step and overlaid on the first layer.

18. A computer program for use by a viewing apparatus, comprising code operable to cause the viewing apparatus to perform:
an acquiring step of acquiring an electronic document file containing a first layer defined to present a document image and a second layer defined to cover at least part of the first layer;
a control step of setting a display mode of the second layer depending on a pattern of viewing the electronic document file; and
a display step of displaying the first and second layers, the second layer being displayed in the display mode set in the control step and overlaid on the first layer.

19. An electronic document file creating method for creating an electronic document file configured to be displayed in a different mode depending on a pattern in which the electronic document file is viewed, the electronic document file creating apparatus storing a first layer defined to present a document image, the method comprising:
a second layer creating step of creating a second layer defined to cover at least part of the first layer;
a control information creating step of creating viewing control information for changing a display mode of the second layer depending on a viewing pattern; and
a creating step of crating an electronic document file containing the first layer, the second layer, and the viewing control information.

20. A computer program for use by an electronic document file creating apparatus that creates an electronic document file configured to be displayed in a different mode depending on a pattern in which the electronic document file is viewed, the electronic document file creating apparatus storing a first layer defined to present a document image, the computer program comprising code operable to cause the electronic document file creating apparatus to perform:
a second layer creating step of creating a second layer defined to cover at least part of the first layer;
a control information creating step of creating viewing control information for changing a display mode of the second layer depending on a viewing pattern; and
a creating step of crating an electronic document file containing the first layer, the second layer, and the viewing control information.
